## Europäisches Patentamt
## European Patent Office
## Office européen des brevets

(19)

(11) Veröffentlichungsnummer: **0 199 831**
**A1**

(12) # EUROPÄISCHE PATENTANMELDUNG

(21) Anmeldenummer: 85104135.0

(51) Int. Cl.⁴: **H 04 M 1/65**

(22) Anmeldetag: 04.04.85

(43) Veröffentlichungstag der Anmeldung:
05.11.86 Patentblatt 86/45

(84) Benannte Vertragsstaaten:
AT BE CH DE FR GB IT LI LU NL SE

(71) Anmelder: Müller, Willy
Guggerstrasse 13
CH-8702 Zollikon(CH)

(72) Erfinder: Müller, Willy
Guggerstrasse 13
CH-8702 Zollikon(CH)

(72) Erfinder: Moser, Markus
Dinorben House 13 Dinorben Avenue
Fleet Hants GU13 9SW(GB)

(74) Vertreter: Feldkamp, Rainer, Dipl.-Ing. et al,
Patent Attorneys Dipl.-Ing. Curt Wallach Dipl.-Ing.
Günther Koch, Dr. Tino Haibach Dipl.-Ing. Rainer
Feldkamp Kaufinger Strasse 8
D-8000 München 2(DE)

(54) **Telefon-Anrufbeantworter mit Anrufaufzeichnung.**

(57) Bei einem Telefon-Anrufbeantworter mit Anrufaufzeichnung, mit einem Anrufdetektor, der ein Startsignal für einen Ansagespeicher liefert, mit einem Sprachschalter, der ein Startsignal an einen Aufzeichnungsspeicher zur Aufzeichnung eines Anrufs liefert, schließt die Anzeige-Ein- richtung zwei Zifferanzeige-Einrichtungen (10a,10b,10c,10d) ein, von denen die erste (10a,10b) die Anzahl der Anrufe und die zweite (10c, 10d) die Anzahl der aufgezeichneten Anrufe anzeigt.

EP 0 199 831 A1

Telefon-Anrufbeantworter

Die Erfindung bezieht sich auf einen Telefon-Anrufbeantworter mit Anrufaufzeichnung, mit einem Anrufdetektor, der ein Startsignal für einen Ansagespeicher
liefert, mit einem Sprachschalter, der ein Startsignal
an einen Aufzeichnungsspeicher zur Aufzeichnung eines
Anrufs liefert, und mit einer Anzeige-Einrichtung für
einen erfolgten Anruf.

Bei einem bekannten Telefon-Anrufbeantworter dieser
Art (DE-PS 22 48 417) sind in der Praxis Anzeige-Einrichtungen vorgesehen, die den Betriebszustand des Anrufbeantworters erkennen lassen. Eine dieser Anzeige-
Einrichtungen, die durch eine Lichtquelle vorgegebener
Farbe gebildet ist, zeigt an, ob ein Anruf empfangen
wurde. Der Benutzer des Telefon-Anrufbeantworters hat
dann die Möglichkeit, den Aufzeichnungsspeicher abzuhören, um die Identität des Anrufers und eine von diesem hinterlassene Nachricht abzuhören. In vielen Fällen
legen jedoch Anrufer sofort auf, ohne eine Nachricht
aufzusprechen. Da dies dem Benutzer des Anrufbeantworters nicht erkennbar ist, ist er in jedem Falle gezwungen, bei Leuchten der einen erfolgten Anruf anzeigenden
Lampe den Aufzeichnungsspeicher abzuhören.

Der Erfindung liegt die Aufgabe zugrunde, einen Telefon-
Anrufbeantworter der eingangs genannten Art zu schaffen,
der nähere Informationen über die Art der Anrufe liefert.

Diese Aufgabe wird durch die im kennzeichnenden Teil des
Patentanspruchs 1 angegebenen Merkmale gelöst.

Vorteilhafte Ausgestaltungen und Weiterbildungen der
Erfindung ergeben sich aus den Unteransprüchen.

Durch die erfindungsgemäße Ausgestaltung des Telefon-
Anrufbeantworters kann der Benutzer unmittelbar feststellen, wieviele Anrufer während der Betriebszeit des
Telefon-Anrufbeantworters angerufen haben und wieviele
dieser Anrufer eine Nachricht hinterlassen haben. Wenn
lediglich Anrufe erfolgt sind, ohne daß Nachrichten hinterlassen wurden, erübrigt sich für den Benutzer ein Abhören des Aufzeichnungsspeichers. Weiterhin ermöglicht
die Anzeige sowohl der erfolgten Anrufe als auch der Anrufe, bei denen eine Nachricht hinterlassen wurde, Rückschlüsse auf die Wirksamkeit eines Ansagetextes, was im
Geschäftsleben von erheblicher Bedeutung sein kann.

Die beiden Ziffernanzeige-Einrichtungen werden vorzugsweise durch zweistellige Dezimalzähler angesteuert, die
je nach Art der in dem Telefon-Anrufbeantworter zur Verfügung stehenden Signale die Startsignale für den Ansagespeicher bzw. die Startsignale für den Aufzeichnungsspeicher zählen, wobei die Startsignale entweder über eine
Auswerteschaltung zugeführt werden, die nur diejenigen
Startsignale des Ansagespeicher auswertet, denen eine
Aufzeichnung einer Nachricht von zumindest einer vorgegebenen Länge folgt oder es werden in dem Anrufbeantworter erzeugte Rücklaufsignale des Aufzeichnungsspeichers
zum Zurückschalten des Zählers für die aufgezeichneten
Gespräche verwendet, wenn bei dem Anrufbeantworter vorgesehen ist, daß der Aufzeichnungsspeicher zurückgespult
wird, wenn nach dem Startsignal des Aufzeichnungsspeichers
von dem Anrufer keine Nachricht aufgesprochen wird.

- 3 -

Die Ausgangssignale der einzelnen Zählerstufen der beiden Zähler werden vorzugsweise über Multiplexer und zugehörige Decodierer einer vierstelligen Ziffernanzeige zugefürt und es ist vorzugsweise vorgesehen, daß die Zähler, die Multiplexer, die Decodierer und eine Taktimpulsquelle oder eine Taktimpulsauswertungsschaltung zusammen mit der Ziffernanzeige zu einer einzigen Baueinheit vereinigt sind, die als fertiges Bauteil in den Anrufbeantworter eingefügt werden kann.

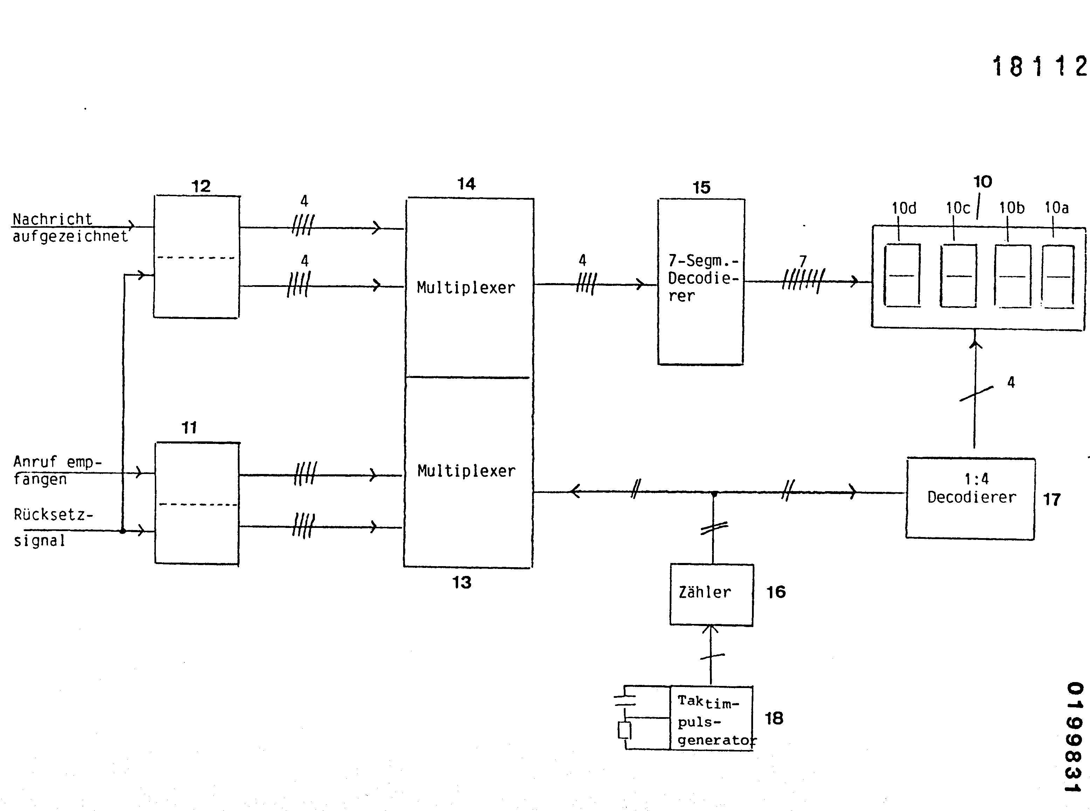

Ein Ausführungsbeispiel der Erfindung wird im folgenden anhand der Zeichnung noch näher erläutert.

In der Zeichnung ist ein Blockschaltbild einer Ausführungsform der Anzeige-Einrichtungen eines Telefon-Anrufbeantworters dargestellt.

Hinsichtlich näherer Einzelheiten eines bekannten Telefon-Anrufbeantworters, bei dem die erfindungsgemäße Anzeige-Einrichtung verwendet wird, wird auf die bereits genannte DE-PS 22 48 417 verwiesen. Ein derartiger Telefon-Anrufbeantworter weist einen Anrufdetektor auf, der einen ankommenden Anruf feststellt und ein Startsignal an einen Ansagespeicher liefert, beispielsweise ein Kassettenlaufwerk, das einen vorher aufgesprochenen Ansagetext dem Anrufenden übermittelt. Ein derartiger Telefon-Anrufbeantworter weist weiterhin einen Sprachschalter auf, der ein ankommendes Gespräch darauf überprüft, ob nach dem Ablauf des Ansagetextes eine Nachricht auf einen Aufzeichnungsspeicher aufgesprochen wird. Dieser Sprachschalter liefert entsprechend ein Startsignal an den Aufzeichnungsspeicher. Erfolgt innerhalb einer vorgegebenen Zeit nach dem Ende des Ansagetextes keine Übermittlung einer Nachricht durch den Anrufenden, so wird der Aufzeichnungsspeicher gestoppt und gegebenenfalls auf den jeweiligen Anfangspunkt zurückgespult. Im letzteren Fall wird ein Rückspulsignal an den Aufzeichnungsspeicher geliefert.

Das in der Zeichnung dargestellte Blockschaltbild der
Anzeige-Einrichtung weist eine vierstellige Ziffernanzeige 10 auf, deren beiden rechten Ziffern 10a,10b die
Anzahl der Anrufe darstellen, während die beiden linken
Ziffern 10c,10d die Anzahl der Anrufe anzeigen, bei denen Nachrichten aufgezeichnet wurden.

Entsprechend weist die Anzeige-Einrichtung zwei Zähler
11,12 auf, die jeweils zweistellige BCD-Zähler sind, deren Rücksetzeingänge miteinander verbunden sind. Der untere Zähler 11 empfängt die Startsignale für den Ansagespeicher, so daß dieser Zähler jeden ankommenden Anruf
zählt. Der obere Zähler 12 empfängt die Startsignale des
Aufzeichnungsspeichers, so daß dieser Zähler lediglich
die Anzahl der Anrufe zählt, bei denen eine Nachricht
auf dem Aufzeichnungsspeicher aufgesprochen wurde.

In Abhängigkeit von der Art des Telefon-Anrufbeantworters
kann diesem zweiten Zähler 12 entweder eine Auswerteschaltung vorgeschaltet sein, die das Startsignal für den Aufzeichnungsspeicher nur dann weiterleitet, wenn dieses
Startsignal über eine vorgegebene Zeit aufrechterhalten
wird, was anzeigt, daß die Nachricht eine gewisse Länge
überschreitet, oder es kann, wenn der Aufzeichnungsspeicher durch ein Rückspulsignal auf einen jeweiligen Anfangspunkt zurückgespult wird, ein Vorwärts-Rückwärts-
Zähler verwendet werden, dessen Vorwärts-Zähleingang mit den Startsignalen des Aufzeichnungsspeichers und dessen
Rückwärts-Zähleingang mit dem Rückspulsignal beaufschlagt
wird. In jedem Fall ist sichergestellt, daß dieser Zähler
nur diejenigen Anrufe zählt, bei denen eine tatsächliche
Nachricht auf den Aufzeichnungsspeicher aufgesprochen wurde.

Da die Zähler 11,12 jeweils durch zwei BDC-Zähler gebildet sind, weisen diese Zähler jeweils acht Ausgänge auf,
was in der Zeichnung durch zwei Ausgangsleitungen mit jeweils vier Strichen angedeutet ist, die jeweils vier Signaladern darstellen sollen. Diese jeweiligen acht Ausgänge
der Zähler 11,12 sind mit den Eingängen von zwei Multiplexern 13,14 verbunden, die jeweils doppelte Eins-Aus-Vier-
Multiplexer sind. Derartige Multiplexer weisen vier Eingänge auf, von denen jeweils einer unter der Steuerung
eines Auswahlsignals, das noch näher erläutert wird, mit
dem Ausgang verbunden wird. Die gleichwertigen Ausgänge
der vier Zählerstufen der beiden Zähler 11,12 sind jeweils mit den vier Eingängen eines Multiplexers verbunden, so daß die vier Multiplexer zusammen ein BDC-codiertes Ausgangssignal liefern, das über eine ebenfalls vier
Signaladern umfassende Leitung einem Siebensegment-Decodierer 15 zugeführt wird, der Steuersignale an die Segmente der vier Ziffern der Ziffernanzeige 10 liefert.

Wie dies weiterhin in der Zeichnung dargestellt ist, ist
eine Taktimpulsquelle mit einem Taktimpulsgenerator 18
und einem Zähler 16 vorgesehen, der Auswahlsignale an die
Multiplexer 13,14 liefert.

Die Auswahlsignale, die am Ausgang des Zählers 18 auftreten, werden weiterhin einem Eins-Aus-Vier-Multiplexer oder

- 6 -

Decodierer 17 zugeführt, der in Abhängigkeit von den
von den Multiplexern 13,14 ausgewählten Ausgangssignalen der Zählerstufen der Zähler 11,12 entsprechende
Ziffern der Ziffernanzeige 10 ansteuert. Auf diese Weise werden die Ausgangssignale der beiden Zählerstufen
des Zählers 11 immer den beiden rechten Ziffern 10a,10b
zugeführt, während die Ausgangssignale der beiden Zählstufen des Zählers 12 immer den beiden linken Ziffern
10c,10d zugeführt werden, weil die Multiplexer 13,14
und der Decodierer 17 synchron zueinander durch den
Zähler 16 angesteuert werden. Der Taktimpulsgenerator
18 kann auch durch eine ohnehin im Anrufbeantworter vorhandene Taktimpulsquelle gebildet sein.

Die Ziffern 10b und 10d stellen immer die höchstwertige
Stelle der Anzahl der Anrufe bzw. aufgezeichneten Nachrichten dar, während die Ziffern 10a und 10c die niedrigste Stelle dieser Anzahl anzeigen.

Die beiden Zähler 11,12 sind durch ein Rücksetzsignal
auf Null zurücksetzbar, das erzeugt wird, wenn der Aufzeichnungsspeicher nach dem Abhören gelöscht wird.

Alle Schaltungen des Blockschaltbildes, d.h. die Zähler
11,12, die Multiplexer 13,14, die Decodierer 15,17 und
die Taktimpulsquelle 16,18 können in Form einer einzigen
Schaltung miteinander vereinigt werden, die gegebenenfalls
sogar die Form einer integrierten Schaltung aufweist und
die mit der vierstelligen Ziffernanzeige verbunden ist, so
daß sich eine kompakte Baueinheit ergibt, die unabhängig
von anderen Teilen in den Anrufbeantworter einsetzbar ist.

**Patentanwälte**

Europäische Patentvertreter
European Patent Attorneys

Dipl.-Ing. Curt Wallach
Dipl.-Ing. Günther Koch
Dipl.-Phys. Dr. Tino Haibach
Dipl.-Ing. Rainer Feldkamp

D-8000 München 2 · Kaufingerstraße 8 · Telefon (0 89) 2 60 80 78 · Telex 5 29 513 wakal d

WILLY MÜLLER

Datum: 2. April 1985

Unser Zeichen: 18 112 - F/r

Telefon-Anrufbeantworter mit Anrufaufzeichnung

Patentansprüche

1. Telefon-Anrufbeantworter mit Anrufaufzeichnung, mit einem Anrufdetektor, der ein Startsignal für einen Ansagespeicher liefert, mit einem Sprachschalter, der ein Startsignal an einen Aufzeichnungsspeicher zur Aufzeichnung eines Anrufs liefert, und mit einer Anzeige-Einrichtung für einen erfolgten Anruf, dadurch g e k e n n z e i c h - n e t, daß die Anzeige-Einrichtung zwei Ziffernanzeige-Einrichtungen (10a,10b,10c,10d) einschließt, von denen die erste (10a,10b) die Anzahl der Anrufe und die zweite (10c,10d) die Anzahl der aufgezeichneten Anrufe anzeigt.

2. Telefon-Anrufbeantworter nach Anspruch 1, dadurch g e k e n n z e i c h n e t, daß die Ziffernanzeige-Einrichtungen (10a bis 10d) durch jeweilige Zähler (11,12) gesteuert sind, von denen der erste (11) die Startsignale für den Ansagespeicher und der zweite (12) die Startsignale für den Aufzeichnungsspeicher zählt.

3. Telefon-Anrufbeantworter nach Anspruch 1 oder 2,

dadurch g e k e n n z e i c h n e t , daß eine
Auswerteschaltung für die Startsignale des Aufzeichnungsspeichers vorgesehen ist, die ein Zählsignal
nur dann an den zweiten Zähler (12) liefert, wenn
der Aufzeichnungsspeicher eine vorgegebene Gesprächsdauer pro Anruf aufzeichnet.

4. Telefon-Anrufbeantworter nach Anspruch 2, bei dem
der Aufzeichnungspeicher an einen jeweiligen Startpunkt zurückgespult wird, wenn nach dem Startsignal
kein Gespräch aufgezeichnet wird, dadurch g e -
k e n n z e i c h n e t , daß der zweite Zähler (12)
ein Vorwärts-/Rückwärts-Zähler ist, der durch die
Startsignale in Vorwärtsrichtung und durch die Rücklaufsignale in Rückwärtsrichtung weiterschaltbar ist.

5. Telefon-Anrufbeantworter nach einem der vorhergehenden Ansprüche, dadurch g e k e n n z e i c h n e t ,
daß die ersten und zweiten Zähler (11,12) jeweils
durch zweistellige BCD-Zähler gebildet sind, deren
Ausgangssignale über Multiplexer (13,14) und Treiberschaltungen (15,16) einer vierstelligen Digitalanzeige
(10) zugeführt sind.

6. Telefon-Anrufbeantworter nach einem der Ansprüche
2 bis 5, bei dem der Aufzeichnungsspeicher durch ein
Löschbefehlssignal löschbar ist, dadurch g e k e n n -
z e i c h n e t , daß das Löschsignal den Rücksetzeingängen der beiden Zähler (11,12) zugeführt wird.

7. Telefon-Anrufbeantworter nach Anspruch 5 oder 6,
dadurch g e k e n n z e i c h n e t , daß die Multiplexer (13,14) jeweils durch zwei Eins-Aus-Vier-Multiplexer gebildet sind, daß den Eingängen eines jeweiligen Eins-Aus-Vier-Multiplexers die gleichwertigen Ausgänge der beiden zweistelligen Zähler (11,12) zugeführt werden, daß die Ausgänge der vier Eins-Aus-Vier-Multiplexer mit den vier Eingängen eines Siebensegment-Decodierers (15) verbunden sind, der die Segmente der vierstelligen Digitalanzeige steuert, daß die Auswahlsteuereingänge der Multiplexer (13,14) mit Ausgangsleitungen einer Taktimpulsquelle verbunden sind und daß die beiden Ausgänge der Taktimpulsquelle (16) weiterhin mit einem Decodierer (17) zur Auswahl der jeweiligen Ziffer der vierstelligen Digitalanzeige verbunden sind.

8. Telefon-Anrufbeantworter nach Anspruch 7, dadurch g e k e n n z e i c h n e t, daß die Zähler (11,12), die Multiplexer (13,14), die Decodierer (15,17) und die Taktimpulsquelle (16,18) mit der vierstelligen Digitalanzeige (10) zu einer Baueinheit vereinigt sind.

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-4 242 540  (FRANCHI)<br><br>* Spalte 9, Zeile 60 - Spalte 11, Zeile 14; Figuren * | 1,2,5-7 | H 04 M   .1/15 |
| A | FR-A-2 415 396  (FRANCHI)<br><br>*  Seite 10, Zeile 34 - Seite 11, Zeile 36; Figuren * | 1,2,5-7 | |
| X | PATENTS ABSTRACTS OF JAPAN, Band 9, Nr. 123 (E-317)[1846], 28. Mai 1985; & JP - A - 60 10 860 (MATSUSHITA DENKI SANGYO K.K.) 21.01.1985 | 1 | |
| | | | **RECHERCHIERTE SACHGEBIETE (Int Cl 4)**<br><br>H 04 M |

Der vorliegende Recherchenbericht wurde für alle Patentansprüche erstellt

| Recherchenort<br>DEN HAAG | Abschlußdatum der Recherche<br>05-12-1985 | Prüfer<br>KEPPENS P.M.R. |
|---|---|---|

KATEGORIE DER GENANNTEN DOKUMENTEN
X  von besonderer Bedeutung allein betrachtet
Y  von besonderer Bedeutung in Verbindung mit einer anderen Veröffentlichung derselben Kategorie
A  technologischer Hintergrund
O  nichtschriftliche Offenbarung
P  Zwischenliteratur
T  der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82